# EUROPEAN PATENT APPLICATION

(11) **EP 1 146 095 A1**
(43) Date of publication of application: **17.10.2001**
(21) Application number: 01108861.4
(22) Date of filing: 09.04.2001
(51) Int. Cl.: C09D 11/02, B41M 1/12

(54) **Oil ink for stencil printing**

(30) Priority: 10.04.2000 JP 2000107673
(71) Applicant: RISO KAGAKU CORPORATION, Tokyo (JP)
(72) Inventor: Ishikawa, Masato, Riso Kagaku Corp. R & D Center, Amimachi, Inashiki-gun, Ibaraki-ken (JP); Yonekawa, Hirotoshi, Riso Kagaku Corp. R&D Center, Amimachi, Inashiki-gun, Ibaraki-ken (JP); Uozumi, Shunsuke, Riso Kagaku Corp. R & D Center, Amimachi, Inashiki-gun, Ibaraki-ken (JP); Yamada, Hiromichi, Riso Kagaku Corp. R & D Center, Amimachi, Inashiki-gun, Ibaraki-ken (JP); Matsuura, Tomoko, c/o Riso Kagaku Corp.R&D Center, Inashiki-gun, Ibaraki-ken (JP)
(74) Representative: Klunker . Schmitt-Nilson . Hirsch

(57) **Abstract**

An oil ink for stencil printing includes oil solvent, a structural viscosity imparting material and a resin component. The resin component includes solid resin not lower than 1 in hexane tolerance and/or alkyd resin 60 to 90 in oil length and not larger than 80 in iodine value. The viscosity of the oil ink is in the range of 10Pa·s to 50Pa·s (at the shear rate of 10/s).

## Description

### BACKGROUND OF THE INVENTION

### Field of the Invention

This invention relates to oil ink for stencil printing.

### Description of the Related Art

In the stencil printing, printing is made by transferring ink to printing paper through perforations in a stencil while the printing paper is conveyed pinched between a printing drum and a pressure roller which are rotated in synchronization with each other.

In the case of stencil printing using a thermally perforated stencil, there has been a problem that the amount of ink transferred through the stencil is excessive and spread of ink occurs, which makes unsharp the image on the printings. In order to suppress spread of ink due to its excessive amount, water-in-oil (W/O) emulsion ink which is high in thixotropy and excellent in structural restoration has been used. Commercially available W/O ink which is considered to be optimal at present is 50 to 70wt% in the water phase concentration. When the W/O ink is transferred to the printing paper, the ink component penetrates into the printing paper and the water content evaporates, whereby the W/O ink dries quickly. After the water content fully evaporates, the ink component left in the printing paper reduces to 1/2 to 1/4 and fixes well on the printing paper.

However, the use of W/O emulsion ink in stencil printing will give rise to the following problem due to the water components contained in the ink and the characteristics of emulsion.

That is, in stencil printing, the printer is not cleaned after printing and accordingly ink is left in the printer. When the ink is left in the printer, the volume of the ink reduces due to evaporation of the water content and at the same time the structural viscosity of the ink deteriorates. Accordingly, immediately after the resumption of printing, deteriorated ink which has been left in the printer and is low in viscosity is supplied, which can result in spread of ink. Further, since the volume of the ink has been reduced, proper amount of ink cannot be supplied to the stencil, which can result in thin spots. Thus, immediately after the resumption of printing, substantial sheets of printing paper are wasted.

Further, since the support of the stencil is generally of Japanese paper, the stencil can be deformed by the water content of the emulsion ink, which can deteriorate printing accuracy. Further, printed paper absorbs the water content of the emulsion ink and swells. As aresult, it becomes difficult to line up the printed sheets of paper on the paper discharge table. When the printed sheets of paper are not accurately lined up, supply and positioning of printing sheets become difficult upon second printing in two-color printing or double-side printing, and a fold can be made on the printed sheets, which damages the stencil on the printing drum. When the stencil is damaged, the printing endurance of the stencil deteriorates.

Further, when the emulsion ink is used in the stencil printer, metal components of the printer are apt to rust when exposed to the water content of the ink or vapor of the water content. Accordingly, when the emulsion ink is used in the stencil printer, the part which can be exposed to the water content of the ink or vapor of the water content must be formed of stainless steel or the like which is expensive. Further, emulsifier of the emulsion ink must be carefully selected taking into account the pot life of the ink which is affected by degradation of the emulsion due to freezing and de-freezing of the water content.

When the printing paper is sized in order to suppress spread of fountain pen ink, penetration of the water component of the emulsion ink into the printing paper is suppressed, and the ink dries slowly, which can gives rise to a problem of offset or the like.

Various attempts to use oil ink in stencil printing in place of emulsion ink have been made. However since the ink transfer amount is larger when oil ink is used than when emulsion ink is used, the use of oil ink gives rise to offset, thin points, strike through and the like. Further, since oil ink is generally high in flowability, it flows out from the printer to stain the surrounding of the printer after the printer is stopped. Thus, W/O emulsion ink is solely used for the stencil printing and the aforesaid problems have been dealt with by improvement of emulsion ink.

However, recent improvement in stencil making devices and controlling technique (the advent of highly precise thermal printing head, laser stencil making and the like) permits formation of smaller and more discrete perforations in the stencil. Further, improvement in the structure of the screen of the printing drum and/or the advent of a printing method in which ink is once transferred from the printing drum to a blanket and then the ink image on the blanket is transferred to printing sheets permits to reduce the amount of ink to be transferred to the printing sheets.

Under these circumstances, the possibility of using oil ink in the stencil printer in place of emulsion ink has been explored. Since oil ink does not contain water unlike emulsion ink, the aforesaid problems due to the water content of emulsion ink can be all overcome by using oil ink.

However when water is simply removed from W/O emulsion ink, spread of ink on the printing paper cannot be controlled, which can result in excessive spread of ink, off set and/or strike through. Further, due to its poor structural viscosity, the ink is apt to drop from the printing drum and stain the surrounding of the printer after the printer is stopped.

Further existing oil ink for the mimeograph cannot be used as it is for the stencil printing of a type where the stencil is made by thermal perforation since it gives rise to a problem of excessive spread of ink, offset and strike through.

Use of other known oil inks such as for stamping, writing materials, lithographic offset printing, gravure printing and the like for the stencil printing results in various problems such as unsatisfactory printing, deformation and/or damage of the printing drum, leakage of ink and the like since the inks are developed by adjusting the viscosity, drying speed and the like to conform to the respective purposes.

Further, since the stencil printer is an open system, it is preferred that satisfactory printing can be obtained from the first sheet after long interruption.

### SUMMARY OF THE INVENTION

In view of the foregoing observations and description, the primary object of the present invention is to provide oil ink which is suitable for stencil printing, that is, which can form a high quality image, does not cause offset and/or strike through, is well fixed on the printing sheet, is less apt to drop from the printing drum and can provide a regular printing from the start of resumption of printing after a long interruption.

The oil ink for stencil printing in accordance with the present invention comprises oil solvent, a structural viscosity imparting material and a resin component and is characterized in that the resin component comprises solid resin not lower than 1 in hexane tolerance and/or alkyd resin 60 to 90 in oil length and not larger than 80 in iodine value, and the viscosity of the oil ink is 10Pa·s to 50Pa·s (at the shear rate of 10/s).

The oil ink for stencil printing of the present invention may include various components in addition to the oil solvent, the structural viscosity imparting material and the resin component so long as it does not contain water component as emulsion ink.

It is preferred that the oil solvent be not lower than 75°C in aniline point.

In this specification, the term "viscosity" should be interpreted to be the viscosity at the shear rate of 10/s. The viscosity of the oil ink of the present invention should be 10Pa·s to 50Pa·s and preferably 15Pa·s to 45Pa·s.

The "hexane tolerance" is a value represented by B/A wherein B represents the amount of n-hexane in mℓ required to cause resin to separate out by dropping n-hexane into A mℓ of 40% solution of the resin in toluene.

The "structural viscosity imparting material" is an additive which provides oil ink with a structural viscosity and may be any material so long as it can provide oil ink with a structural viscosity. However, it is preferred that the structural viscosity imparting material comprises at least one material selected from the group consisting of loading pigment, metal soap, organic bentonite, polyamide gel and reaction products of resin and aluminum chelate or aluminum alcoholate.

Preferably the reaction products of resin and aluminum chelate or aluminum alcoholate are those obtained by reacting resin and aluminum chelate or aluminum alcoholate at an elevated temperature not lower than 100°C, and more preferably are those obtained by reacting resin and aluminum chelate or aluminum alcoholate with higher fatty acid or higher alcohol added. Preferably higher fatty acid or higher alcohol is added in an amount of 0.5 to 2.5 moles per 1 mole of aluminum chelate or aluminum alcoholate.

By the use of the oil ink in accordance with the present invention, spread of ink on the printing paper can be controlled, and accordingly, offset and/or strike through due to excessive amount of ink transfer and generation of thin spots in solid parts due to poor ink transfer are avoided, whereby high quality printing can be obtained. Further, since containing no water content, the oil ink in accordance with the present invention is small in reduction of volume even if left in the printer for a long time unlike emulsion ink where reduction in volume is large due to evaporation of the water content. Accordingly, generation of thin spots and/or spread of ink does not occur even if printing is resumed after a long interruption, whereby an unnecessary waste of printing paper can be suppressed.

Further, since the oil ink in accordance with the present invention contains no water content, deformation of the stencil due to absorption of water is prevented, whereby printing accuracy can be kept constant.

Further, since absorbing no water content, the printed paper does not swell. As a result, lining up the printed sheets of paper on the paper discharge table is facilitated, and positioning of printing sheets is facilitated upon second printing in two-color printing or double-side printing.

Further, since the oil ink in accordance with the present invention contains no water content, attack on the components of the stencil printer by water can be avoided, whereby the printer can be manufactured at low cost.

Though emulsion ink is not satisfactory in pot life, the oil ink of the present invention is excellent in pot life since it contains no water content and does not take a form of emulsion.

Since the oil ink of the present invention dries rapidly, the problem of offset or the like hardly arises even if sized printing paper is used.

Further, being not lower than 10Pa·s in viscosity, the oil ink of the present invention does not drop from the printing drum to stain the surrounding even if the printer is stopped.

Since the resin component comprises solid resin not lower than 1 in hexane tolerance and/or alkyd resin 60 to 90 in oil length and not larger than 80 in iodine value, dispersion of structural viscosity imparting material and coloring agent which are in the form of powder is improved, whereby sharpness of printed image can be increased and the ink is better fixed to the paper.

When the structural viscosity imparting material comprises at least one material selected from the group consisting of loading pigment, metal soap, organic bentonite, polyamide gel and reaction products of resin and aluminum chelate or aluminum alcoholate, the viscosity of the ink can be more easily set to 10Pa·s to 50Pa·s (at the shear rate of 10/s).

### DETAILED DESCRIPTION OF THE INVENTION

The oil ink in accordance with the present invention will be described in more detail hereinbelow.

The oil ink in accordance with the present invention includes solid resin not lower than 1 in hexane tolerance and/or alkyd resin 60 to 90 in oil length and not larger than 80 in iodine value as the resin component, and is 10Pa·s to 50Pa·s (at the shear rate of 10/s) in viscosity.

The resin component is for improving printability and may comprise at least one of solid resin which is not lower than 1 in hexane tolerance and alkyd resin which is 60 to 90 in oil length and not larger than 80 in iodine value as the resin component. The "oil length" represents the amount of fatty acid groups contained in a molecule. When the oil length is in the aforesaid range, the alkyd resin is apt to be dissolved in non-polar solvent high in aniline point and can be dissolved even in non-polar aroma-free solvent which is not larger than 0.5% in aromatic compound content.

As the solid resin, maleic acid resin, rosin-modified phenol resin, petroleum resin, xylene resin, rosin ester resin, polymerized rosin ester resin, rosin ester hydride resin, ketone resin, cured resin, acrylic resin, rubber derivatives, terpene resin and the like may be suitably used.

As the alkyd resin, tall oil-modified alkyd resin, coconut oil-modified alkyd resin, castor oil-modified alkyd resin, linseed oil-modified alkyd resin, tung oil-modified alkyd resin, soybean oil-modified alkyd resin and the like may be suitably used.

These solid resins and the alkyd resins may be used alone or in a mixture of two or more of the resins, and even a mixture of the solid resin and the alkyd resin may be used so long as the viscosity of the ink is 10Pa·s to 50Pa·s (at the shear rate of 10/s).

Alkyd resin is excellent in pigment dispersing power. However, alkyd resin made from fat or oil having a double bond in its molecule reacts with atmospheric oxygen and forms film and accordingly, is apt to cause clogging of the screen of the printing drum and the like. Accordingly, when alkyd resin is contained in oil ink, it is necessary that the alkyd resin is not larger than 80 in iodine value. The iodine value represents the number of double bonds, and when the alkyd resin is too large in iodine value, formation of film becomes serious.

As the oil solvent, either mineral oil solvent or vegetable oil solvent may be used. When mineral oil is used as the oil solvent, it is preferred from the viewpoint of environmental health that the oil be less in aromatic series fraction, that is, be not lower than 75°C in aniline point. It is preferred that the vegetable oil be non-drying oil (not larger than 100 in iodine value) since vegetable oil is apt to be affected by atmospheric oxygen. As the mineral oil, spindle oil, machine oil, gear oil, liquid paraffin, motor oil, aroma-free solvent, ink oil and the like can be suitably employed. As the vegetable oil, soybean oil, coconut oil, tall oil, castor oil, dehydrated castor oil, olive oil, safflower oil, linseed oil and the like can be suitably employed.

It is preferred that the structural viscosity imparting material comprises at least one material selected from the group consisting of loading pigment, metal soap, organic bentonite, polyamide gel and reaction products of resin and aluminum chelate or aluminum alcoholate.

As the loading pigment, for example, inorganic fine particles of calcium carbonate, precipitated barium sulfate, barite powder, silica, alumina white, aluminum hydroxide, kaolin, talc, clay, diatomaceous earth, and bentonite; and organic fine particles of polyacrylate, polyurethane, polyester, polyethylene, polypropylene, polyvinyl chloride, polyvinylidene chloride, polystyrene, polysiloxane, phenol resin, epoxy resin, benzoguanamine and copolymers thereof are preferred. These fine particles may be surface-treated.

As the metal soap, salts of higher fatty acid, hydroxy higher fatty acid, octylic acid, acids of vegetable fats and oils, acids of tall fats and oils or the like with aluminum, calcium, magnesium, zinc or the like are preferred.

As the polyamide gel, those obtained by heating and stirring a mixture of alkyd resin and solid polyamide resin are preferred.

The reaction products of resin and aluminum chelate or aluminum alcoholate may be obtained by reacting resin, for instance, alkyd resin and/or rosin-modified resin and aluminum chelate or aluminum alcoholate at an elevated temperature in solvent. Preferably, this reaction is carried out at a temperature not lower than 100°C, and more preferably at a temperature in the range of 140 to 200°C.

When the reaction of resin and aluminum chelate or aluminum alcoholate is carried out with higher fatty acid or higher alcohol added, the stability of the gel against change with time is improved, and at the same time, the aluminum chelate or aluminum alcoholate takes in the groups of the higher fatty acid or the higher alcohol during reaction with the alkyd resin and the rosin-modified resin, whereby the reaction product is prevented from becoming extremely large in molecular weight to such an extent that the resin becomes less apt to be dissolved. Further, the reaction product takes in, by way of aluminum, lipophilic components which are relatively short in length of the carbon chain and uniform in molecular weight, whereby lipophilic nature of the reaction product is enhanced and becomes more apt to be dissolved in oil solvent used when ink is made.

Preferably the higher fatty acid or higher alcohol is added in an amount of 0.5 to 2.5 moles per 1 mole of aluminum chelate or aluminum alcoholate. When the amount of the higher fatty acid or higher alcohol is less than 0.5 moles per 1 mole of aluminum chelate or aluminum alcoholate, the aforesaid effect cannot be satisfactory. To the contrast when the amount of the higher fatty acid or higher alcohol is more than 2.5 moles per 1 mole of aluminum chelate or aluminum alcoholate, reaction of resin and aluminum chelate or aluminum alcoholate is suppressed, and the aforesaid effect of the reaction product on the gel deteriorates.

As the aluminum chelate, alkyl acetoacetate aluminum diisopropylate, aluminumtris (ethyl acetoacetate), aluminum monoacetylacetonatebis (ethyl acetoacetate), and aluminumtris (acetyl acetoacetate) are preferred.

As the aluminum alcoholate, aluminum isopropylate, monosec-butoxyaluminum diisopropylate, aluminum sec-butylate, aluminum ethylate and the like are preferred.

The amount of the structural viscosity imparting material to be added depends upon the kind of structural viscosity imparting material and other ink components and is adjusted so that the viscosity of ink becomes 10Pa·s to 50Pa·s (at the shear rate of 10/s). Since as the amount of structural viscosity imparting material increases, color development by the coloring agent becomes worse, it is preferred that the viscosity of ink is adjusted with the amount of the structural viscosity imparting material held as small as possible.

As the coloring agent, known pigments and dyes of various colors may be employed. As the pigment, inorganic pigments such as carbon blacks (e.g., furnace black, lampblack, acetylene black), titanium oxide and red iron oxide; and organic pigments such as azo series pigments, cyanine series pigments, dioxsane series pigments and quinacridone series pigments and the like (e.g., phthalocyanine blue, disazo yellow, lake red, Watching red, brilliant scarlet, pyrazolone red) can be employed alone or in combination of two or more of these pigments. Though being high in chromaticity, lake pigments are unsuitable for ink including water like emulsion ink since they bleed in the water phase. However the lake pigments can be used for the oil ink for stencil printing of the present invention. As the dyes, it is preferred that oil-soluble dyes are preferable.

Dispersing agent is generally contained in ink in order to promote dispersion of pigments in the ink. Also in this invention, it is preferred that such dispersing agent be added.

As the dispersing agent, nonionic surface active agents such as sorbitan fatty acid esters, polyglycerin fatty acid esters, fatty acid monoglyceride, fatty acid diglyceride, and adducts of fatty acid with ethylene; alkylamine series high polymers; aluminum chelates; copolmer of styrene and maleic anhydride; partial alkyl ester of polyacrylate; polyalkylene polyamine; multivalent fatty carbonic acid; polyether; ester type anion surface active agents, salt of high molecular polycarboxylic acid with long-chain amine; polyamide; phosphoric ester surface active agents; alkyl sulfocarboxilate; α-olefin sulfonate and dioctylsulfosuccinate are preferred.

Anti-oxidant may be added in order to suppress change of properties by oxidation of components of the ink including resin and oil. As the anti-oxidant, dibutyl-hydroxytoluene (BHT), propyl gallate, butyl-hydroxyanisole, and the like are preferred.

For the purpose of increasing resistance to wear of the printed surface, wax may be added. As the wax, carnauba wax, microcrystalline wax, paraffine, montan wax, shellac wax, beeswax, low-molecular-weight branched polyethylene and the like are preferred. By adding such a wax, resistance to wear of the printed surface is enhanced, and by adding such a wax in a large amount, also structural viscosity can be given to the ink.

The present invention will be described in more detail with reference to examples, hereinbelow.

Oil inks (embodiments 1 to 11 abbreviated: EM 1 to 11 in table 1) in accordance with first to eleventh embodiments of the present invention were prepared in the following manner in compositions shown in the following table 1, and oil inks (comparative examples 1 to 9: abbreviated CX 1 to 9 in table 2) not in accordance with the present invention were prepared in the following manner as first to ninth comparative examples in compositions shown in the following table 2. In tables 1 and 2, the amounts of components are shown in parts by weight.

### Embodiment 1

35 parts by weight of coconut-oil-modified alkyd resin (ARAKYD 6902: Arakawa Chemical Industries, LTD, oil length: 78, iodine value: 10), 25 parts by weight of furnace carbon black (Mitsubishi Chemical corporation), 5.0 parts by weight of organic bentonite (S-BEN: HOJUN YOKO), and 5.0 parts by weight of sorbitan monooleate (NIKKOL SO-10: NIHON SURFACTANT KOGYO K. K.) were mixed well and dispersed by a triple roll mill. Then, 30.0 parts by weight of AF-4 solvent (Nippon Mitsubishi Oil Corporation, aniline point: 78.2°C) was added and the mixture was further stirred to form a uniform system, whereby stencil printing oil ink of a first embodiment of the present invention was obtained.

### Embodiment 2

Stencil printing oil ink of a second embodiment was obtained in the same manner as the first embodiment except that AF-6 solvent (Nippon Mitsubishi Oil Corporation, aniline point: 93.6°C) was used in place of AF-4 solvent and the composition was as shown in the following table 1.

### Embodiment 3

Rosin-modified phenol resin 1 (HARIPHENOL P-160, Harima Chemicals, inc. hexane tolerance: 1.8) were heat-dissolved in AF-6 solvent to form varnish. Thereafter, carbonblack, organic bentonite and sorbitan monooleate were added and the mixture was mixed well and dispersed and kneaded by a triple roll mill, thereby obtaining stencil printing oil ink of a third embodiment.

### Embodiment 4

Stencil printing oil ink of a fourth embodiment was obtained in the same manner as the third embodiment except that the composition was as shown in the following table 1.

### Embodiment 5

9.1 parts by weight of coconut-oil-modified alkyd resin and 0.5 parts by weight of oleic acid were heat-dissolved in 11 parts by weight of AF-6 solvent, and the mixture was cooled to 160°C. Then 0.4 parts by weight of aluminum chelate (aluminum chelate M, KAWAKEN FINE CHEMICALS CO., LTD.) was added to the mixture and the resultant mixture was stirred for one hour. Then 0.2 parts by weight of BHT was further added to obtain aluminum chelate resin gel (A) . According to the composition shown in the following table 1, the aluminum chelate resin gel (A) and rosin-modified phenol resin 1 were heated and stirred in AF-6 solvent, whereby the aluminum chelate resin gel (A) and the rosin-modified phenol resin 1 were dissolved in the AF-6 solvent. After themixture was cooled, sorbitanmonooleate, organic bentonite and carbon black were added to the mixture, were mixed well and kneaded by a triple roll mill. Then, AF-6 solvent was added and the mixture was further stirred to form a uniform system, whereby stencil printing oil ink of a fifth embodiment of the present invention was obtained.

### Embodiment 6

Stencil printing oil ink of a sixth embodiment was obtained in the same manner as the fifth embodiment except that aluminum chelate resin gel (A) obtained in the same manner as in the fifth embodiment and rosin-modified phenol resin 2 (HARIPHENOL P-222, Harima Chemicals, inc. hexane tolerance: at least 5) were used and the other components were as shown in the following table 1.

### Embodiment 7

Stencil printing oil ink of a seventh embodiment was obtained in the same manner as the fifth embodiment except that aluminum chelate resin gel (A) obtained in the same manner as in the fifth embodiment, AF-5 solvent (Nippon Mitsubishi Oil Corporation, aniline point: 88.2°C), and phthalocyanine blue (LIONOL BLUE, TOYO INK MFG. Co., LTD.) were used and the other components were as shown in the following table 1.

### Embodiment 8

Stencil printing oil ink of an eighth embodiment was obtained in the same manner as the fifth embodiment except that aluminum chelate resin gel (A) obtained in the same manner as in the fifth embodiment and rosin-modified phenol resin 4 (HARIPHENOL KZ-115, Harima Chemicals, inc. hexane tolerance: 1.7) were used and the other components were as shown in the following table 1.

### Embodiment 9

Rosin-modified phenol resin 3 (HARIPHENOL 564, Harima Chemicals, inc. hexane tolerance: 1.1) was heat-dissolved in AF-6 solvent, and BHT was added to the mixture after the mixture was cooled to 16 0°C, whereby varnish was obtained. Thereafter, carbon black, organic bentonite and sorbitan monooleate were added and the mixture was stirred well and kneaded by a triple roll mill, thereby obtaining stencil printing oil ink of an ninth embodiment.

### Embodiment 10

24.0 parts by weight of coconut-oil-modified alkyd resin, 13.0 parts by weight of rosin-modified phenol resin 3 and 5.0 parts by weight of rosin-modified phenol resin 2 were stirred for 30 minutes to be dissolved in 38.5 parts by weight of AF-6 solvent at 180°C, and the mixture was cooled to 150°C. Then 4.0 parts by weight of aluminum octylate (OCTOPE A1, HOPE CHEMICAL CO.) and 2.0 parts by weight of oleic acid were added to the mixture and the resultant mixture was stirred for 30 minutes, whereby gel varnish was obtained. Then 13.5 parts by weight of carbon black was further added and the resultant mixture was stirred and kneaded by a triple roll mill, whereby stencil printing oil ink of a tenth embodiment of the present invention was obtained.

### Embodiment 11

28 parts by weight of coconut-oil-modified alkyd resin and 2.0 parts by weight of polyamide resin (POLYMIDE S-40E, SANYO CHEMICAL INDUSTRIES, LTD.) were stirred for one hour at 170°C, thereby obtaining polyamide gel. According to the composition shown in the following table 1, rosin-modified phenol resin 2 were added to the polyamide gel and the mixture was heat-dissolved in AF-6 solvent at 180°C. Then the mixture was cooled to 160°C. Then BHT was further added and the resultant mixture was stirred. Carbon black and organic bentonite were added to the mixture after the mixture is further cooled, and the resultant mixture were mixed well and kneaded by a triple roll mill. Then, AF-5 solvent was added and the mixture was further stirred, whereby stencil printing oil ink of an eleventh embodiment of the present invention was obtained.

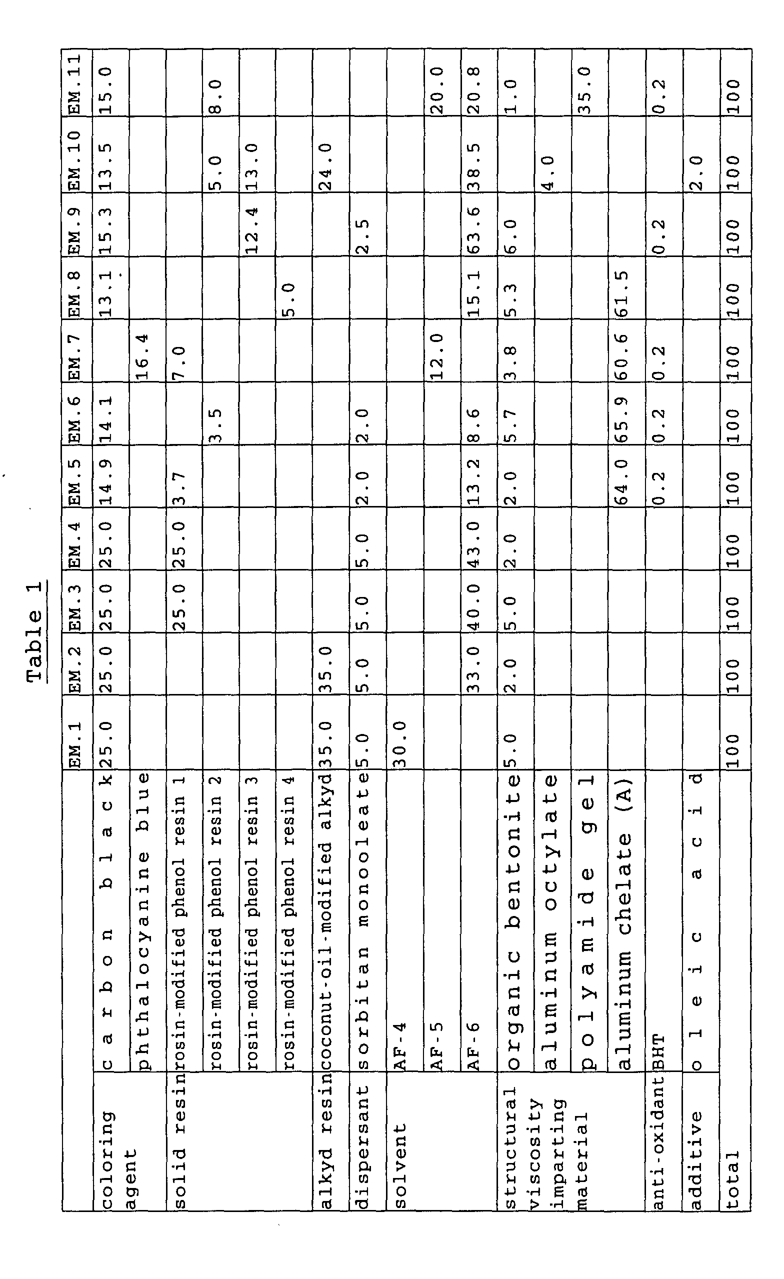

### Comparative Example 1

Stencil printing oil ink of a first comparative example was obtained in the same manner as the first embodiment except that the composition was as shown in the following table 2.

### Comparative Example 2

Stencil printing oil ink of a second comparative example was obtained in the same manner as the first comparative example except that the composition was as shown in the following table 2 and NAPHTHESOL M (Nippon Mitsubishi Oil Corporation, aniline point: 67°C) was used in place of AF-4 solvent.

### Comparative Example 3

Stencil printing oil ink of a third comparative example was obtained in the same manner as the third embodiment except that the composition was as shown in the following table 2 and AF-4 solvent was used in place of AF-6 solvent.

### Comparative Example 4

Stencil printing oil ink of a fourth comparative example was obtained in the same manner as the third comparative example except that the composition was as shown in the following table 2, and NAPHTHESOL M was used instead of AF-4 solvent, and organic bentonite was not added.

### Comparative Example 5

Stencil printing oil ink of a fifth comparative example was obtained in the same manner as the second embodiment except that the composition was as shown in the following table 2, linseed-oil-modified alkyd resin (ARAKYD 5001: Arakawa Chemical Industries, LTD, oil length: 71, iodine value: 130) was used in place of coconut-oil-modified alkyd resin and AF-5 solvent was used in place of AF-6 solvent.

### Comparative Example 6

Stencil printing oil ink of a sixth comparative example was obtained in the same manner as the fifth embodiment except that the composition was as shown in the following table 2 and rosin-modified phenol resin 5 (HARIPHENOL 145G, Harima Chemicals, inc. hexane tolerance: 0.7) was used in place of rosin-modified phenol resin 1.

### Comparative Example 7

Stencil printing oil ink of a seventh comparative example was obtained in the same manner as the fifth embodiment except that the composition was as shown in the following table 2 and rosin-modified maleic resin (MALKYD No.5, Arakawa Chemical Industries, LTD, hexane tolerance: 0.5) was used in place of rosin-modified phenol resin 1.

### Comparative Example 8

According to the composition shown in the following table 2, rosin-modified phenol resin 1 was heat-dissolved in 20 parts by weight of AF-6 solvent at 180°C, and BHT was added to the mixture after the mixture was cooled to 160°C. After the mixture was further cooled, carbon black and sorbitan monooleate were added and the resultant mixture were mixed well and kneaded by a triple roll mill. Then, 30.5 parts by weight of AF-5 solvent was added and the mixture was further stirred, whereby stencil printing oil ink of an eighth comparative example was obtained.

### Comparative Example 9

According to the composition shown in the following table 2, carbon black, organic bentonite and castor-oil-modified alkyd resin (ARAKYD No4 : Arakawa Chemical Industries, LTD, oil length: 58, iodine value: 20) were mixed and stirred, and then the resultant mixture were mixed well and kneaded by a triple roll mill. Then, 42 parts by weight of AF-6 solvent was added and the mixture was further stirred, whereby stencil printing oil ink of a ninth comparative example was obtained.

**Table 2**

| | | CX.1 | CX.2 | CX.3 | CX.4 | CX.5 | CX.6 | CX.7 | CX.8 | CX.9 |
|---|---|---|---|---|---|---|---|---|---|---|
| coloring agent | carbon black | 25.0 | 25.0 | 25.0 | 25.0 | 25.0 | 18.0 | 15.0 | 13.2 | 17.0 |
| solid resin | rosin-modified phenol resin 1 | | | 25.0 | 25.0 | | | | 15.0 | |
| | rosin-modified phenol resin 5 | | | | | | 15.0 | | | |
| | rosin-modified maleic resin | | | | | | | 15.0 | | |
| alkyd resin | coconut-oil-modified alkyd | 35.0 | 35.0 | | | | | 4.0 | 19.0 | |
| | linseed-oil-modified alkyd | | | | | 35.0 | | | | |
| | castor-oil-modified alkyd | | | | | | | | | 37.0 |
| dispersant | sorbitan monooleate | 5.0 | 5.0 | 5.0 | 5.0 | 5.0 | 2.0 | 2.0 | 2.1 | |
| solvent | AF-4 | 25.0 | | 35.0 | | | | | | |
| | AF-5 | | | | | 33.0 | | 58.8 | 30.5 | |
| | AF-6 | | | | | | 40.4 | | 20.0 | 42.0 |
| | Naphthesol M | | 30.0 | | 45.0 | | | | | |
| structural viscosity imparting material | organic bentonite | 10.0 | 5.0 | 10.0 | | 2.0 | 3.7 | 5.0 | | 4.0 |
| | aluminum octylate | | | | | | | | | |
| | polyamide gel | | | | | | | | | |
| | aluminum chelate (A) | | | | | | 20.7 | | | |
| anti-oxidant BHT | | | | | | | 0.2 | 0.2 | 0.2 | |
| total | | 100 | 100 | 100 | 100 | 100 | 100 | 100 | 100 | 100 |

### Method of evaluation

Using the stencil printing oil inks of the first to fourth embodiments and the first to fifth comparative examples, printing was made by the use of a novel stencil printer disclosed in Japanese Unexamined Patent Publication No. 6 (1994) -48014, which can greatly reduce the ink transfer amount as compared with conventional stencil printers . Further, using the stencil printing oil inks of the fifth to eleventh embodiments and the sixth to ninth comparative examples, printing was made by the use of a stencil printer, RISOGRAPH SR7400 (RISO KAGAKU CORPORATION), provided with a thermal printing head which is 600dpi and can finely perforates the stencil material.

Then spread of ink, existence of thin spots, offset, strike through, the quality of first printing after interruption of 48 hours, and the degree of rubbing off after printing (fixation) were evaluated on the printings.

As for spread of ink and existence of thin spots, the image on the printings were checked through a microscope (×20), and the ink was marked with ⓞ (very good), ○ (good), △ (not good) or × (bad) in the following tables 3 and 4 according to the quality of the image.

Offset and strike through were visually checked, and the ink was marked with ⓞ (no), ○ (very low), Δ (somewhat high) or × (high) in the following tables 3 and 4 according to the degree of generation of offset and/or strike through.

As for the quality of first printing after interruption of 48 hours, spread and thin spots were checked on the first printing after the printer had been left for 48 hours in an isothermic room held at 23°C. When no change from the state before the interruption is observed, the ink was marked with ○ in the following tables 3 and 4, and when change from the state before the interruption is observed, the ink was marked with ×.

As for fixation, after printing, the printings were allowed to stand at room temperature for one day, and then rubbed 5 times with a crockmeter (TOYO SEIKI SEISAKU-SHO, LTD.). Thereafter, stain on the printing surface were visually checked, and the ink was marked with ⓞ (no), ○ (very low), Δ (slightly high) or × (high) in the following tables 3 and 4 according to the degree of stain.

Further the viscosity of the inks were measured. That is, a cone of 2cm, 1° and a rheometer (RheoStress RS75, HAAKE) were used, and the viscosity at a shear rate of 10/s was read on the flow curve obtained. The result is shown in the following tables 3 and 4.

**Table 3**

| | | EM.1 | EM.2 | EM.3 | EM.4 | EM.5 | EM.6 | EM.7 | EM.8 | EM.9 | EM.10 | EM.11 |
|---|---|---|---|---|---|---|---|---|---|---|---|---|
| viscosity | | 43 | 10 | 48 | 15 | 14 | 48 | 24 | 20 | 12 | 28 | 21 |
| novel stencil printer | spread, thin spots | ⓞ | ⓞ | ○ | ⓞ | | | | | | | |
| | offset | ⓞ | ⓞ | ⓞ | ⓞ | | | | | | | |
| | strike through | ⓞ | ⓞ | ⓞ | ⓞ | | | | | | | |
| SR7400 | spread, thin spots | | | | | ○ | ⓞ | ⓞ | ⓞ | ○ | ⓞ | ⓞ |
| | offset | | | | | ○ | ○ | ○ | ○ | ○ | ○ | ○ |
| | strike through | | | | | ○ | ○ | ○ | ○ | ○ | ○ | ○ |
| after 48 hours | | ○ | ○ | ○ | ○ | ○ | ○ | ○ | ○ | ○ | ○ | ○ |
| fixation | | ○ | ○ | ⓞ | ⓞ | ⓞ | ⓞ | ⓞ | ⓞ | ⓞ | ⓞ | ⓞ |

**Table 4**

| | | CX.1 | CX.2 | CX.3 | CX.4 | CX.5 | CX.6 | CX.7 | CX.8 | CX.9 |
|---|---|---|---|---|---|---|---|---|---|---|
| viscosity | | 51 | 9 | 53 | 9 | 35 | 25 | 13 | 5 | 12 |
| novel stencil printer | spread, thin spots | Δ | Δ | × | × | ⓞ | | | | |
| | offset | ⓞ | × | ○ | × | ⓞ | | | | |
| | strike through | ⓞ | × | ⓞ | × | ⓞ | | | | |
| SR7400 | spread, thin spots | | | | | | × | × | × | ○ |
| | offset | | | | | | ○ | ○ | × | ○ |
| | strike through | | | | | | ○ | ○ | × | ○ |
| after 48 hours | | ○ | ○ | ○ | ○ | × | ○ | ○ | ○ | ○ |
| fixation | | ○ | ○ | ⓞ | ⓞ | ○ | × | × | Δ | Δ |

In the stencil printing oil inks in accordance with the first and second embodiments, alkyd resin which was 60 to 90 in oil length and not larger than 80 in iodine value was used as the resin component. In the stencil printing oil inks in accordance with the third to ninth and eleventh embodiments, solid resin which was not lower than 1 in hexane tolerance was used as the resin component. In the stencil printing oil ink in accordance with the tenth embodiment, a mixture of solid resin which was not lower than 1 in hexane tolerance and alkyd resin which was 60 to 90 in oil length and not larger than 80 in iodine value was used as the resin component. In any of the stencil oil inks in accordance with the first to eleventh embodiments of the present invention, the viscosity of the oil ink was 10Pa·s to 50Pa·s (at the shear rate of 10/s). The oil inks of the first to eleventh embodiments did not drop from the printer to stain the surrounding. Further, when the oil inks of the first to eleventh embodiments were used, the amount of ink transferred to the printing paper was well controlled, and as a result, offset or strike through due to an excessive amount of ink were not observed and thin spots due to shortage of ink were not observed. Further, when solid resin was contained in the ink as in the third to eleventh embodiment, the resistance to rubbing was improved.

The oil inks of the fourth and eighth comparative examples containing no structural viscosity imparting material were not suitable for stencil printing from all the viewpoints of spread, thin spot, offset and strike through.

The oil inks of the first to third comparative examples which were not in the range of 10Pa·s to 50Pa·s (at the shear rate of 10/s) in viscosity though contained structural viscosity imparting material were not suitable for stencil printing from the viewpoints of spread and thin spot. The oil inks of the second, fourth and eighth comparative examples which were lower than 10Pa·s in viscosity dropped from the printer and stained the surrounding.

The oil ink of the fifth comparative example which were 130 in iodine value of the alkyd resin though were in the range of 10Pa·s to 50Pa·s (at the shear rate of 10/s) in viscosity, oxidization of the ink occurred after 48 hours, which resulted in clogging of the perforations of the stencil and generated thin spots. In the oil ink of the sixth comparative example which was lower than 1 (0.7) in hexane tolerance of the rosin-modified phenol resin and the oil ink of the seventh comparative example which was lower than 1 (0.5) in hexane tolerance of the rosin-modified maleic resin, separation of resin occurred, which resulted in poor fixation.

The oil ink of the ninth comparative example which were formed by dissolving castor-oil-modified alkyd resin short in oil length (59) in AF-6 solvent high in aniline point (93.6°C) though were in the range of 10Pa·s to 50Pa·s (at the shear rate of 10/s) in viscosity was unsatisfactory in dissolving and was slightly bad in fixation.

As can be understood from the example, in accordance with the present invention, spread of ink on the printing paper surface can be controlled. Further, in accordance with the present invention, offset or strike through due to an excessive amount of ink can be prevented, and generation of thin spots in solid portions due to shortage of transferred ink can be prevented, whereby high quality printings can be obtained.

## Claims

1. An oil ink for stencil printing comprising oil solvent, a structural viscosity imparting material and a resin component wherein the improvement comprises that
the resin component comprises solid resin not lower than 1 in hexane tolerance and/or alkyd resin 60 to 90 in oil length and not larger than 80 in iodine value, and the viscosity of the oil ink is 10Pa·s to 50Pa·s (at the shear rate of 10/s).

2. An oil ink for stencil printing as defined in Claim 1 in which the oil solvent is not lower than 75°C in aniline point.

3. An oil ink for stencil printing as defined in Claim 1 in which the structural viscosity imparting material comprises at least one material selected from the group consisting of loading pigment, metal soap, organic bentonite, polyamide gel and reaction products of resin and aluminum chelate or aluminum alcoholate.

4. An oil ink for stencil printing as defined in Claim 3 in which the reaction products of resin and aluminum chelate or aluminum alcoholate are those obtained by reacting resin and aluminum chelate or aluminum alcoholate at an elevated temperature not lower than 100°C.

5. An oil ink for stencil printing as defined in Claim 3 in which the reaction products of resin and aluminum chelate or aluminum alcoholate are those obtained by reacting resin and aluminum chelate or aluminum alcoholate with higher fatty acid or higher alcohol added.

6. An oil ink for stencil printing as defined in Claim 5 in which the higher fatty acid or higher alcohol is added in an amount of 0.5 to 2.5 moles per 1 mole of aluminum chelate or aluminum alcoholate.
